# EUROPÄISCHE PATENTSCHRIFT

(11) **EP 0 538 506 B1**
(45) Veröffentlichungstag und Bekanntmachung des Hinweises auf die Patenterteilung: **02.02.1994**
(21) Anmeldenummer: 91117955.4
(22) Anmeldetag: 22.10.1991
(51) Int. Cl.: B23B 13/02, B23B 13/12

(54) **Werkstückhandhabungseinrichtung für eine Drehmaschine**
Workpieces handling device for a lathe
Dispositif pour la manutention de pièces sur un tour

(43) Veröffentlichungstag der Anmeldung: 28.04.1993
(73) Patentinhaber: Gildemeister AG, D-33689 Bielefeld (DE)
(72) Erfinder: Mascheroni, Alberto, Dr. Ing., I-20032 Cormano (IT)

(56) Entgegenhaltungen:
- DE-A- 2 331 032
- DE-A- 3 733 405
- GB-A- 1 244 620
- GB-A- 2 102 312
- US-A- 3 910 476

## Beschreibung

Die Erfindung betrifft eine Werkstückhandhabungseinrichtung für eine Drehmaschine mit einer Werkstückspindel, die eine Spindelbohrung zur Aufnahme stangenförmiger Werkstücke aufweist, wobei die Werkstückspindel zum Durchtreten des Werkstücks und für ein Zu- und Abführen des Werkstücks von der Spindelrückseite ausgebildet ist, mit einer in die Spindelbohrung eintauchenden Werkstückgreifeinrichtung, wobei die Spindelbohrung der werkzeugspindel ein Führungsrohr aufnimmt.

Eine derartige Werkstückhandhabungseinrichtung ist z.B. aus der US-A-3 910 476, die den nächstliegenden Stand beschreibt, bekannt.

Eine ähnliche Werkstückhandhabungseinrichtung ist für die Gegenspindel einer Werkzeugmaschine mit zwei koaxial gegenüberliegenden Werkstückspindeln aus DE-A 37 33 405 bekannt. Die Spannzange der Abgreifeinrichtung kann das Werkstück beim Eintauchen in die Werkstückspindel nur an einem Zapfen ergreifen, weil zwischen Spannrohr bzw. Führungsrohr und Werkstück für die Spannzange kein Platz zur Verfügung steht. Werkstücke ohne einen solchen Zapfen können nicht ergriffen werden. Dadurch, daß das Werkstück an seinem äußersten Ende erfaßt wird, ergeben sich bei langen Werkstücken außerdem ungünstige Kraftverhältnisse, die zu einer Beschädigung der Werkstückoberfläche führen können.

Eine weitere Einrichtung ist aus DE-B 14 77 466 bekannt. Bei der beschriebenen Drehmaschine wird eine Werkstoffstange durch eine Nachschubstange, die eine Zange trägt, der Werkstückspindel zugeführt und aus dieser auch entfernt. Da die Zange einen größeren Durchmesser aufweißt als die Werkstoffstange, kann diese in der Werkstückspindel während der Bearbeitung nicht geführt werden. Bei langen Stangen, die zum Schwingen neigen, beeinträchtigt dies die Bearbeitungsgenauigkeit.

Es sind außerdem Führungsbuchsen in Werkzeugmaschinenspindeln aus DE-A 26 10 176 bekannt, die Führungsleisten zur Abstützung von Stangenmaterial aufweisen. Die Führungsleisten dienen dazu, Durchmesserunterschiede der Werkstoffstangen auszugleichen.

Es ist Aufgabe der vorliegenden Erfindung, eine Werkstückhandhabungseinrichtung so auszubilden, daß die Führung stangenförmiger Werkstücke in der Werkstückspindel während der Bearbeitung möglich ist.

Die Aufgabe wird durch die kennzeichnenden Merkmale des Anspruchs 1 gelöst.

Durch die Ausgestaltung der Spannzange können Werkstücke an ihrem Führungsdurchmesser, d. h. dem größten Werkstückdurchmesser, ergriffen werden. Die Spannzange kann damit weiter über das Werkstück geschoben werden, als dies bei bekannten Einrichtungen möglich ist. Der Führungsdurchmesser des Führungsrohres kann dem Werkstück angepaßt sein und braucht keine Rücksicht auf den Platzbedarf der Greifzange zu nehmen. Damit wird ein Schwingen des Werkstücks während der Bearbeitung durch das in die Werkstückspindel auskragende Werkstückende sicher verhindert.

Die Einrichtung läßt sich auch verwirklichen, wenn kein Führungsrohr in der Werkstückspindel vorgesehen ist und das Werkstück im Zugrohr der Spannzange geführt wird.

Die weit über das Werkstück geschobene Abgreifzange macht bei der Ablage des Werkstücks auf einer Werkstücktransporteinrichtung einen Ausstoßer erforderlich, damit das Werkstück sicher aus der Abgreifzange entfernt werden kann.

Die Erfindung wird an Hand der folgenden Darstellungen näher beschrieben. Es zeigen:

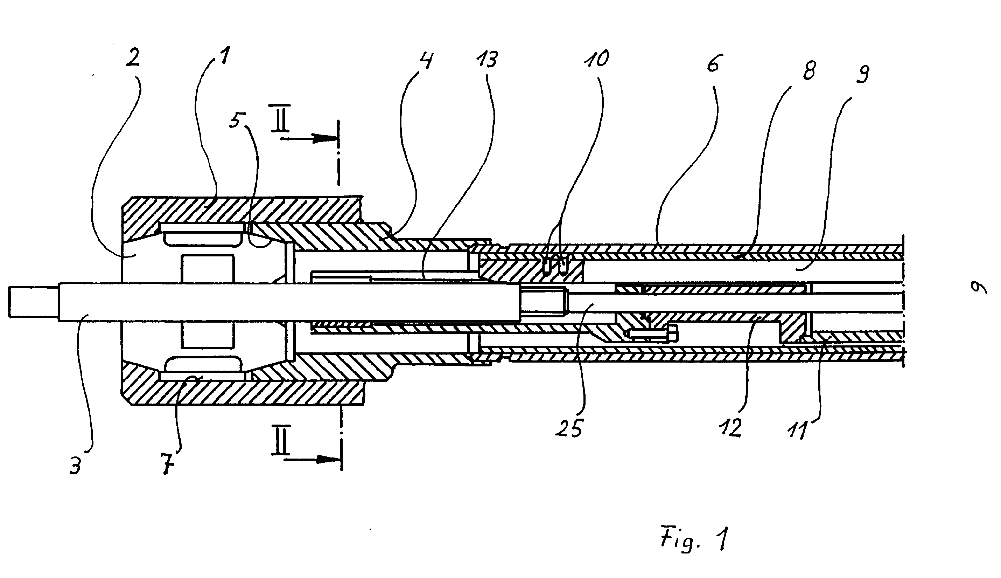

- Fig. 1: einen Längsschnitt durch die Werkstückspindel;
- Fig. 2: einen Querschnitt gemäß der Schnittlinie II - II der Fig.1;
- Fig. 3: eine Abgreifzange im Schnitt;
- Fig. 4: ein Führungsrohr im Längsschnitt.

In einer Werkstückspindel 1, von der nur der Spindelkopf dargestellt ist, sind Spannelemente 2 einer Spannzange angeordnet, die ein Werkstück 3 lösbar in der Werkstückspindel 1 halten. Die Spannelemente 2 werden von einer Spannhülse 4 betätigt, die dazu über einen Innenkonus 5 verfügt. Die Spannhülse 4 ist mit einem Spannrohr 6 verbunden, durch das die Spannhülse 4 in Spindelachsrichtung bewegt werden kann. Spannhülse 4 und Spannrohr 6 befinden sich in der durchgehenden Spindelbohrung 7 der Werkstückspindel 1. Im Spannrohr 6 ist ein weiteres Rohr konzentrisch gehalten, das als Führungsrohr 8 dient und im Inneren Führungsleisten 9 trägt, die durch Schrauben 10 mit dem Führungsrohr 8 verbunden sind. Zwischen den Führungsleisten 9 sind Rohrsegmente 11 angeordnet, die nach hinten aus dem Führungsrohr herausragen und vom Schieber einer Werkstückhandhabungseinrichtung getragen werden. Zum Spindelkopf hin sind die Rohrsegmente 11 durch ein Kupplungsstück 12 miteinander verbunden. An dem Kupplungsstück 12 wird jeweils die dem Werkstückdurchmesser entsprechende Abgreifzange 13 befestigt. Das Kupplungsstück 12 und die Abgreifzange 13 weisen zentrische Bohrungen 23, 24 für einen Auswerfer 25 auf, der das Werkstück 3, nachdem es die Werkstückspindel 1 am hinteren Ende verlassen hat, aus der Abgreifzange 13 stößt.

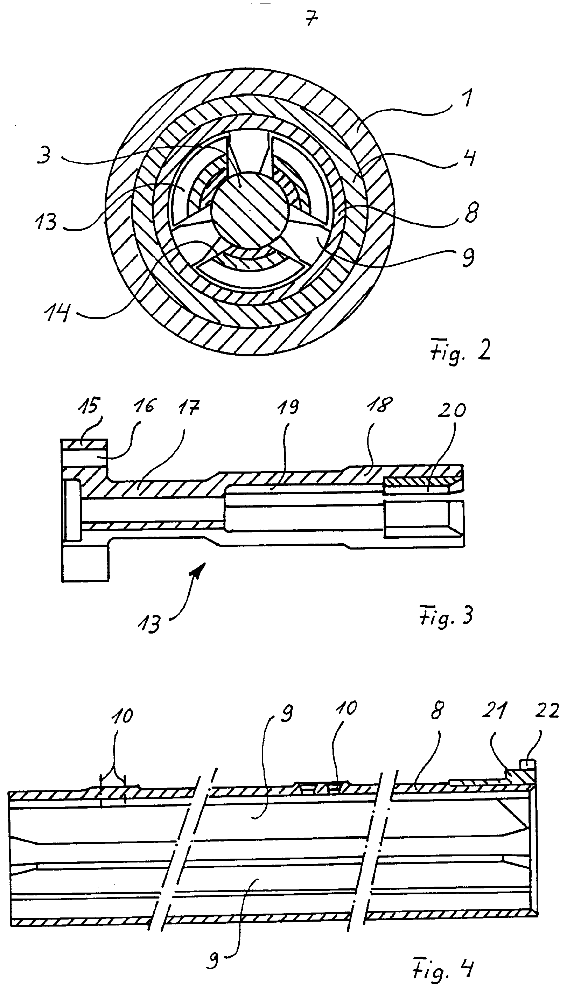

Fig. 2 zeigt einen vergrößerten Querschnitt durch die Werkstückspindel 1. Die Abgreifzange 13 besitzt drei über den Umfang gleichmäßig verteilte Ausnehmungen 14, in die die am Führungsrohr 8 befestigten Führungsleisten 9 hineinragen. Mit drei Führungsleisten 9 kann das Werkstück ausreichend geführt werden, so daß Schwingungen des freien Werkstückendes nicht hervorgerufen werden können. Die Abgreifzange 13 umfaßt das Werkstück 3 in dem von den Führungsleisten 9 freibleibenden Bereich.

In Fig. 3 ist eine Abgreifzange 13 dargestellt. An den Befestigungsflansch 15 mit den Befestigungsbohrungen 16 schließt sich ein Verlängerungsstück 17 an, das mit dem Greifer 18 einstückig ausgebildet ist. Der Greifer 18 besteht aus federnden Stegen 19 und den Greiferbacken 20, die aus elastischem Material bestehen können.

In Fig. 4 ist eine Ausführung eines Führungsrohres zu sehen, bei dem zwei der drei Führungsleisten 9 sichtbar sind. Die Führungsleisten 9 sind an mehreren Stellen durch Befestigungsschrauben 10 mit dem Führungsrohr 8 verbunden. Da zwischen dem Werkstück 3 und den Führungsleisten 9 nur ein geringer Spalt bestehen darf, muß zur Anpassung an unterschiedliche Werkstückdurchmesser beim Bearbeitungswechsel das Führungsrohr 8 gewechselt werden. Das Führungsrohr 8 wird durch einen Flansch 21 in der Werkstückspindel 1 gehalten und ist gegenüber dieser durch eine Mitnehmernut 22 gegen Verdrehung gesichert. Bei einem Werkstückserienwechsel muß außerdem die Abgreifzange 13 gewechselt werden, da federnde Greifer 18 nur einen relativ kleinen Durchmesserbereich überbrücken können.

## Patentansprüche

1. Werkstückhandhabungseinrichtung für eine Drehmaschine mit einer Werkstückspindel (1), mit einer Spindelbohrung (7) zur Aufnahme stangenförmiger Werkstücke (3), die zum Durchtreten des Werkstücks (3) und für ein Zu- und Abführung des Werkstücks (3) von der Rückseite durch die Spindelbohrung (7) ausgebildet ist, und mit einer von der Rückseite aus in die Spindelbohrung (7) eintauchenden Werkstückgreifeinrichtung, wobei die Spindelbohrung (7) der Werkstückspindel (1) ein Führungsrohr (8) aufnimmt, dadurch gekennzeichnet, daß das Führungsrohr (8) nach innen gerichtete, über den Umfang verteilte Führungsleisten (9) aufweist, an denen das Werkstück mit seinem größten Außenumfang anliegt und daß die Abgreifzange (13) der Werkstückgreifeinrichtung den Führungsleisten (9) entsprechende Längsschlitze (14) aufweist.

2. Werkstückhandhabungseinrichtung nach Anspruch 1 dadurch gekennzeichnet, daß die Führungsleisten im Spannrohr (6) einer Werkstückspanneinrichtung vorgesehen sind.

3. Werkstückhandhabungseinrichtung nach Anspruch 1 dadurch gekennzeichnet, daß die Abgreifzange (13) von einem Auswerfer (25) durchdrungen wird.

4. Werkstückhandhabungseinrichtung nach Anspruch 1, dadurch gekennzeichnet, daß die Abgreifzange (13) eine über den Spannbereich hinaus verlängerte Bohrung zur Aufnahme des Werkstückendes aufweist.

5. Werkstückhandhabungseinrichtung nach Anspruch 1, dadurch gekennzeichnet, daß die Abgreifzange (13) einen Flansch (15) zur Befestigung an einem von Rohrsegmenten (11) getragenen Kupplungsstück (12) besitzt, der Ausnehmungen (14) für Führungsleisten (9) hat.

## Claims

1. Workpiece handling device for a lathe with a workpiece spindle (1), with a spindle hole (7) to take up rod-shaped workpieces (3) designed to allow the workpiece (3) to extend from the rear through the spindle hole (7) and the workpiece (3) to be fed and removed, and with a workpiece gripper device entering from the rear into the spindle hole (7), the spindle hole (7) of the workpiece spindle (1) accomodating a guide tube (8), characterized in that the guide tube (8) is provided with guide strips (9) arranged around its circumference and directed to the inside, on which the workpiece makes contact with its largest outer circumference, and that the gripping jaws (13) of the workpiece gripping device is provided with longitudinal slots (14) corresponding to the guide strips (9).

2. Workpiece handling device in accordance with claim 1, characterized in that the guide strips are provided in the clamping tube (6) of a workpiece clamping device.

3. Workpiece handling device in accordance with claim 1, characterized in that an ejector (25) extends through the gripping jaws (13).

4. Workpiece handling device in accordance with claim 1, characterized in that the gripping jaws (13) hole extends beyond the clamping range to take up the workpiece end.

5. Workpiece handling device in accordance with claim 1, characterized in that the gripping jaws (13) possess a flange (15) allowing the attachment to a coupling piece (12) resting on tube segments (11), this flange having recesses (14) for the guide strips (9).

## Revendications

1. Dispositif permettant de manipuler une pièce à usiner pour un tour, comportant une broche porte-pièce (1), comportant une ouverture (7) de la broche destinée à recevoir des pièces à usiner (3) en forme de barre et adaptée au passage de la pièce (3) et à un approvisionnement et à une évacuation de la pièce (3) par la face arrière, à travers l'ouverture (7) de la broche, et comportant un dispositif de saisie de pièces pénétrant dans l'ouverture (7) de la broche à partir de la face arrière, l'ouverture (7) de la broche porte-pièce (1) recevant un tube de guidage (8), caractérisé en ce que le tube de guidage (8) présente des rails de guidage (9) orientés vers l'intérieur et répartis sur la circonférence, sur lesquels la pièce repose par sa plus grande circonférence extérieure, et en ce que le mandrin (13) du dispositif de saisie des pièces présente des fentes longitudinales (14) correspondant aux rails de guidage (9).

2. Dispositif permettant de manipuler une pièce à usiner selon la revendication 1, caractérisé en ce que les rails de guidage sont prévus dans le tube de serrage (6) d'un dispositif de serrage de pièces à usiner.

3. Dispositif permettant de manipuler une pièce à usiner selon la revendication 1, caractérisé en ce que le mandrin (13) est traversé par un éjecteur (25).

4. Dispositif permettant de manipuler une pièce à usiner selon la revendication 1, caractérisé en ce que le mandrin (13) présente une ouverture pour le logement de l'extrémité des pièces qui se prolonge au-delà de la zone de serrage.

5. Dispositif permettant de manipuler une pièce à usiner selon la revendication 1, caractérisé en ce que le mandrin (13) possède un flasque (15) destiné à être fixé sur un élément de couplage (12) porté par des segments (11) de tube, qui présente des évidements (14) pour des rails de guidage (9).
